# EUROPEAN PATENT APPLICATION

(11) **EP 2 632 163 A2**
(43) Date of publication of application: **28.08.2013**
(21) Application number: 13164580.6
(22) Date of filing: 10.07.2007
(51) Int. Cl.: H04N 7/26

(54) **Method and apparatus for signaling view scalability in multi-view video coding**

(30) Priority: 20.07.2006 US 807928 P; 21.07.2006 US 807974 P
(62) Divisional of application: 07810333.0
(71) Applicant: Thomson Licensing, 92130 Issy-les-Moulineaux (FR)
(72) Inventor: Pandit, Purvin Bibhas, NJ 08540-6620 Princeton (US); Su, Yeping, NJ 08540-6620 PRINCETON (US); Boyce, Jill MacDonald, Princeton, NJ 08540-6620 (US); Yin, Peng, NF 08540-6620 Princeton (US); Gomila, Cristina, 35576 Cesson Sevigne (FR)
(74) Representative: Perrot, Sébastien

(57) **Abstract**

There are provided methods and apparatus for signaling view scalability in multi-view video coding. An apparatus includes an encoder (100) for encoding at least one picture for at least one view corresponding to multi-view video content in a resultant bitstream. The encoder signals at least one of a view direction and a view level to support view scalability for the at least one view using at least one of a message, a field, a flag, and a syntax element.

## Description

### CROSS-REFERENCE TO RELATED APPLICATIONS

This application claims the benefit of U.S. Provisional Application Serial No. 60/807,928, filed 20 July, 2006, and U.S. Provisional Application Serial No. 60/807,974, filed 21 July, 2006, both of which are incorporated by reference herein in their respective entireties.

### TECHNICAL FIELD

The present principles relate generally to video encoding and decoding and, more particularly, to methods and apparatus for signaling view scalability in multi-view video coding.

### BACKGROUND

A Multi-view Video Coding (MVC) sequence is a set of two or more video sequences that capture the same scene from a different view point

In the joint model for Multi-view video coding (MVC), it was proposed to use the following syntax for the NAL unit header, as shown in TABLE 1.

**TABLE 1**

| nal_unit_header_svc_mvc_extension( ) { | **C** | **Descriptor** |
|---|---|---|
| **svc_mvc_flag** | All | u(1) |
| if (!svc_mvc_flag) { | | |
| **simple_priority_id** | All | u(6) |
| **discardable_flag** | All | u(1) |
| **temporal_level** | All | u(3) |
| **dependency_id** | All | u(3) |
| **quality_level** | All | u(2) |
| } else { | | |
| **reserved_bits** | All | u(2) |
| **temporal_level** | All | u(3) |
| **view_id** | All | u(10) |
| } | | |
| nalUnitHeaderBytes += 2 | | |
| } | | |

However, this provides only temporal scalability but not view scalability, and temporal scalability is only optional.

Also, in the joint model for Multi-view video coding (MVC), the Sequence Parameter Set (SPS) includes syntax elements which can be used to derive information that, in turn, can be used for view scalability. These syntax elements are shown below in TABLE 2.

**TABLE 2**

| seq_parameter_set_mvc_extension( ) { | **C** | **Descriptor** |
|---|---|---|
| **sps_mvc_selection_flag** | | u(1) |
| **num_views_minus_1** | | ue(v) |
| if(sps_mvc_selection_flag) | | |
| **num_multiview_refs_for_list0** | | ue(v) |
| **num_multiview_refs_for_list1** | | ue(v) |
| for( i = 0; i < num_multiview_refs_for_list0; i++ ) { | | |
| **anchor_reference_view_for_list_0[i]** | | ue(v) |
| **non_anchor_reference_view_for_list_0[i**] | | ue(v) |
| } | | |
| for( i = 0; i < num_multiview_refs_for_list1; i++ ) { | | |
| **anchor_reference_view_for_l**ist_1[i] | | ue(v) |
| **non_anchor_reference_view_for_list_1[i]** | | ue(v) |
| } | | |
| } else { | | |
| **dependency_update_flag** | | u(1) |
| if (dependency_update_flag = = 1) { | | |
| for(j = 0; j < num_views_minus_1; j++) { | | |
| **anchor_picture_dependency_maps[i][j]** | | f(1) |
| if (anchor_picture_dependency_maps[i][j] == 1) | | |
| **non_anchor_picture_dependency_maps[i][j]** | | f(1) |
| } | | |
| } | | |
| } | | |
| } | | |

However, this approach requires recursive calls and can be a burden on simple routers.

### SUMMARY

These and other drawbacks and disadvantages of the prior art are addressed by the present principles, which are directed to methods and apparatus for signaling view scalability in Multi-view Video Coding (MVC).

According to an aspect of the present principles, there is provided an apparatus. The apparatus includes an encoder for encoding at least one picture for at least one view corresponding to multi-view video content in a resultant bitstream. The encoder signals at least one of a view direction and a view level to support view scalability for the at least one view using at least one of a message, a field, a flag, and a syntax element.

According to another aspect of the present principles, there is provided a method. The method includes encoding at least one picture for at least one view corresponding to multi-view video content in a resultant bitstream. The encoding step includes signaling at least one of a view direction and a view level to support view scalability for the at least one view using at least one of a message, a field, a flag, and a syntax element.

According to yet another aspect of the present principles, there is provided an apparatus. The apparatus includes a decoder for decoding at least one picture for at least one view corresponding to multi-view video content from a resultant bitstream. The decoder determines at least one of a view direction and a view level to support view scalability for the at least one view using at least one of a message, a field, a flag, and a syntax element.

According to still another aspect of the present principles, there is provided a method. The method includes decoding at least one picture for at least one view corresponding to multi-view video content from a resultant bitstream. The decoding step includes determining at least one of a view direction and a view level to support view scalability for the at least one view using at least one of a message, a field, a flag, and a syntax element.

These and other aspects, features and advantages of the present principles will become apparent from the following detailed description of exemplary embodiments, which is to be read in connection with the accompanying drawings.

### BRIEF DESCRIPTION OF THE DRAWINGS

The present principles may be better understood in accordance with the following exemplary figures, in which:
FIG. 1 is a block diagram for an exemplary Multi-view Video Coding (MVC) encoder to which the present principles may be applied, in accordance with an embodiment of the present principles;
FIG. 2 is a block diagram for an exemplary Multi-view Video Coding (MVC) decoder to which the present principles may be applied, in accordance with an embodiment of the present principles;
FIG. 3 is a diagram for a view scalability example to which the present principles may be applied, in accordance with an embodiment of the present principles;
FIG. 4 is a flow diagram for an exemplary method for encoding multi-view video content and signaling view scalability thereof, in accordance with an embodiment of the present principles; and
FIG. 5 is a flow diagram for an exemplary method for decoding multi-view video content and determining view scalability thereof, in accordance with an embodiment of the present principles.

### DETAILED DESCRIPTION

The present principles are directed to methods and apparatus for signaling view scalability in Multi-view Video Coding (MVC).

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles means that a particular feature, structure, characteristic, and so forth described in connection with the embodiment is included in at least one embodiment of the present principles. Thus, the appearances of the phrase "in one embodiment" or "in an embodiment" appearing in various places throughout the specification are not necessarily all referring to the same embodiment.

As used herein, "high level syntax" refers to syntax present in the bitstream that resides hierarchically above the macroblock layer. For example, high level syntax, as used herein, may refer to, but is not limited to, syntax at the slice header level, Supplemental Enhancement Information (SEI) level, Picture Parameter Set (PPS) level, Sequence Parameter Set (SPS) level and Network Abstraction Layer (NAL) unit header level.

"I-view" refers to a view that may be decoded using prediction from decoded samples within the same view only and does not depend on any other view and, thus, can be independently decoded.

"P view" refers to a view that may be decoded using prediction from decoded samples within the same view or inter-view prediction from previously-decoded reference pictures, using only list 0 to place the reference pictures.

"B view" refers to a view that may be decoded using prediction from decoded samples within the same view or inter-view prediction from previously-decoded reference pictures, using list 0 and list 1 to place the reference pictures.

"View level" indicates the level of view scalability for a particular NAL unit.

"View direction" indicates one of 4 directions with the I-view as the center view. The possible directions are left, right, up or down.

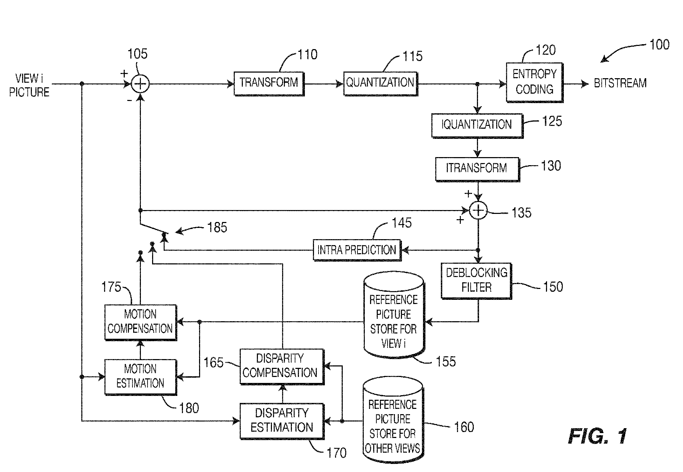

Turning to FIG. 1, an exemplary Multi-view Video Coding (MVC) encoder is indicated generally by the reference numeral 100. The encoder 100 includes a combiner 105 having an output connected in signal communication with an input of a transformer 110. An output of the transformer 110 is connected in signal communication with an input of quantizer 115. An output of the quantizer 115 is connected in signal communication with an input of an entropy coder 120 and an input of an inverse quantizer 125. An output of the inverse quantizer 125 is connected in signal communication with an input of an inverse transformer 130. An output of the inverse transformer 130 is connected in signal communication with a first non-inverting input of a combiner 135. An output of the combiner 135 is connected in signal communication with an input of an intra predictor 145 and an input of a deblocking filter 150. An output of the deblocking filter 150 is connected in signal communication with an input of a reference picture store 155 (for view i). An output of the reference picture store 155 is connected in signal communication with a first input of a motion compensator 175 and a first input of a motion estimator 180. An output of the motion estimator 180 is connected in signal communication with a second input of the motion compensator 175

An output of a reference picture store 160 (for other views) is connected in signal communication with a first input of a disparity estimator 170 and a first input of a disparity compensator 165. An output of the disparity estimator 170 is connected in signal communication with a second input of the disparity compensator 165.

An output of the entropy decoder 120 is available as an output of the encoder 100. A non-inverting input of the combiner 105 is available as an input of the encoder 100, and is connected in signal communication with a second input of the disparity estimator 170, and a second input of the motion estimator 180. An output of a switch 185 is connected in signal communication with a second non-inverting input of the combiner 135 and with an inverting input of the combiner 105. The switch 185 includes a first input connected in signal communication with an output of the motion compensator 175, a second input connected in signal communication with an output of the disparity compensator 165, and a third input connected in signal communication with an output of the intra predictor 145.

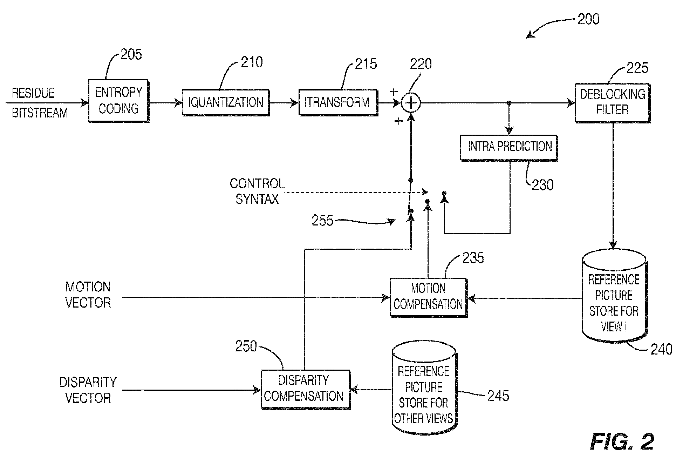

Turning to FIG. 2, an exemplary Multi-view Video Coding (MVC) decoder is indicated generally by the reference numeral 200. The decoder 200 includes an entropy decoder 205 having an output connected in signal communication with an input of an inverse quantizer 210. An output of the inverse quantizer is connected in signal communication with an input of an inverse transformer 215. An output of the inverse transformer 215 is connected in signal communication with a first non-inverting input of a combiner 220. An output of the combiner 220 is connected in signal communication with an input of a deblocking filter 225 and an input of an intra predictor 230. An output of the deblocking filter 225 is connected in signal communication with an input of a reference picture store 240 (for view i). An output of the reference picture store 240 is connected in signal communication with a first input of a motion compensator 235.

An output of a reference picture store 245 (for other views) is connected in signal communication with a first input of a disparity compensator 250.

An input of the entropy coder 205 is available as an input to the decoder 200, for receiving a residue bitstream. Moreover, a control input of the switch 255 is also available as an input to the decoder 200, for receiving control syntax to control which input is selected by the switch 255. Further, a second input of the motion compensator 235 is available as an input of the decoder 200, for receiving motion vectors. Also, a second input of the disparity compensator 250 is available as an input to the decoder 200, for receiving disparity vectors.

An output of a switch 255 is connected in signal communication with a second non-inverting input of the combiner 220. A first input of the switch 255 is connected in signal communication with an output of the disparity compensator 250. A second input of the switch 255 is connected in signal communication with an output of the motion compensator 235. A third input of the switch 255 is connected in signal communication with an output of the intra predictor 230. An output of the mode module 260 is connected in signal communication with the switch 255 for controlling which input is selected by the switch 255. An output of the deblocking filter 225 is available as an output of the decoder.

In accordance with the present principles, methods and apparatus are provided for signaling view scalability in Multi-view Video Coding (MVC).

In an embodiment, view scalability is signaled and/or indicated using at least one of a message, a field, a flag, and a syntax element. In an embodiment, view scalability is signaled via a high level syntax element. For example, in an embodiment, view scalability is supported by signaling view scalability within the Network Abstraction Layer (NAL) unit header.

As noted above, in the current implementation of Multi-view Video Coding (MVC), a method does not exist to support view scalability. In an embodiment, we address this issue by modifying the NAL unit header. That is, we include information pertaining to view scalability sufficient to support view scalability within the NAL unit header.

In other embodiments, the high level syntax to indicate view scalability may be present in one or more other high level syntaxes including, but not limited to, syntaxes in the Sequence Parameter Set (SPS), the Picture Parameter Set (PPS), a Supplemental Enhancement Information (SEI) message, and a slice header. It is to be appreciated that the view scalability information may be signaled any of in-band or out-of-band.

In one implementation of the NAL unit header embodiment, we describe the reuse of existing bits in the NAL unit header to signal the view scalability information. Thus, we propose to signal the view direction and, for each view, we propose to signal the scalability. For an I-view, a suffix NAL unit may be used to describe the NAL units that belong to this view and thus no direction information is required for this view.

For all other views, in an embodiment, two bits may be used to signal the direction. Of course, a different number of bits may also be used, while maintaining the spirit of the present principles.

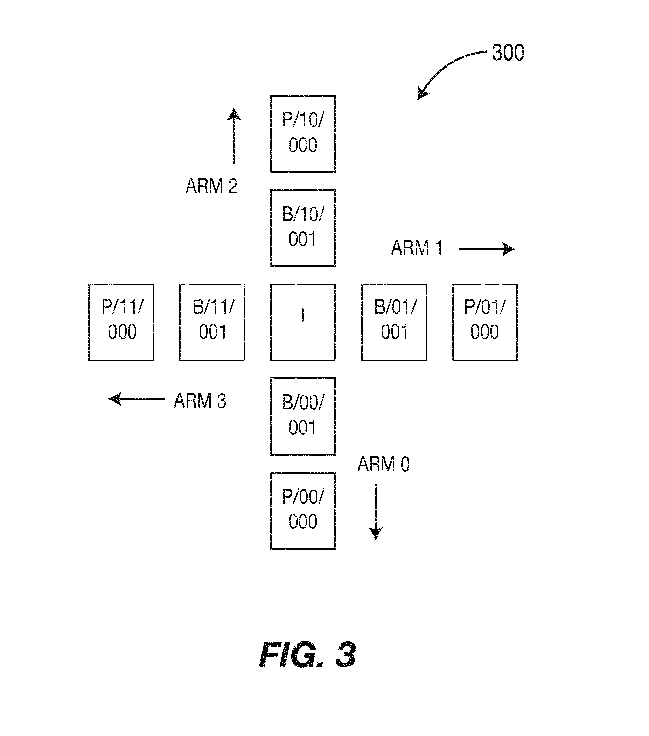

An embodiment of view scalability is illustrated in FIG. 3 and using the proposed syntax of TABLE 1. Turning to FIG. 3, a view scalability example to which the present principles may be applied is indicated generally by the reference numeral 300. In FIG. 3, we have 4 directions from the center I-view. The I-view does not need direction information since it will be coded with syntax compatible with the International Organization for Standardization/International Electrotechnical Commission (ISO/IEC) Moving Picture Experts Group-4 (MPEG-4) Part 10 Advanced Video Coding (AVC) standard/International Telecommunication Union, Telecommunication Sector (ITU-T) H.264 recommendation (hereinafter the "MPEG-4 AVC standard"), and a suffix NAL unit will be used to signal this information. All the other view directions are indicated using the two bit view_direction syntax element. This is illustrated in the first two bits in FIG. 3. The three other bits in FIG. 3 correspond to the view_level information. Using a combination of these five bits, coarse view scalability can be achieved.

For example, if the target values are set as view_direction <= 01 and view_level = 000, in this case I-view, DIRECTION 0 and DIRECTION 1 will be selected. Within each view, only the P-views will be selected and all the B-views will be discarded.

There might be cases where two bits will not be sufficient to assign direction. In this case, one solution is to group cameras.

This information also signals dependency information and, thus, can also be used for coarse random access. Example, if we require the P-view in DIRECTION 2, we set view_direction = 10 and view_level == 000. In this way, we can achieve random access P-view in DIRECTION 2.

**TABLE 3**

| nal_unit_header_svc_mvc_extension( ) { | **C** | **Descriptor** |
|---|---|---|
| **svc_mvc_flag** | All | u(1) |
| if (!svc_mvc_flag) { | | |
| **simple_priority_id** | All | u(6) |
| **discardable_flag** | All | u(1) |
| **temporal_level** | All | u(3) |
| **dependency_id** | All | u(3) |
| **quality_level** | All | u(2) |
| } else { | | |
| **view_direction** | All | u(2) |
| **view_level** | All | u(3) |
| **view_id** | All | u(10) |
| } | | |
| nalUnitHeaderBytes += 2 | | |
| } | | |

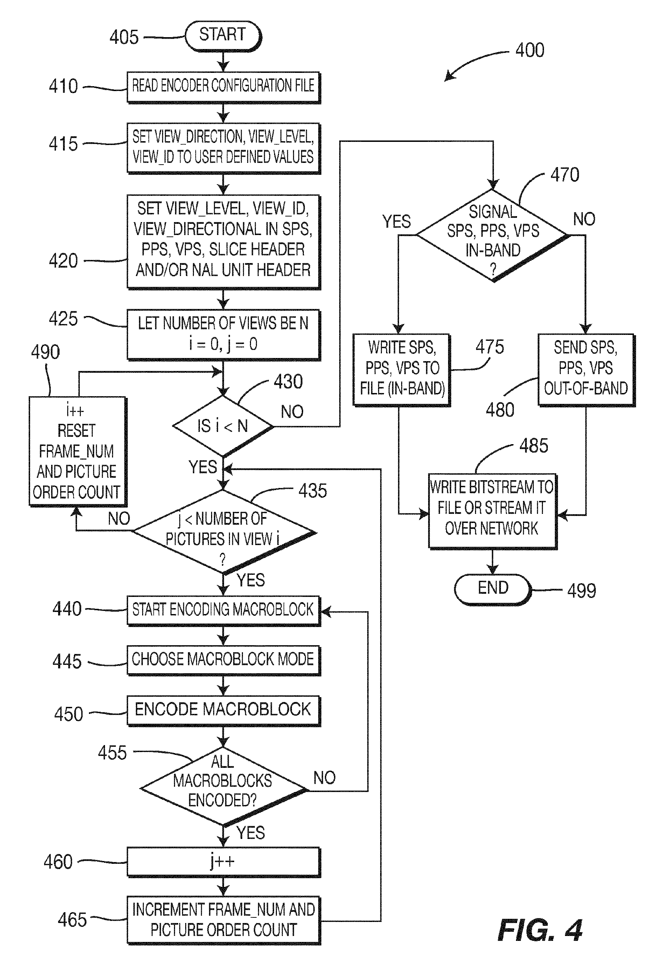

Turning to FIG. 4, an exemplary method for encoding multi-view video content and signaling view scalability thereof is indicated generally by the reference numeral 400.

The method 400 includes a start block 400 that passes control to a function block 405. The function block 405 reads an encoder configuration file, and passes control to a function block 415. The function block 415 sets view_direction, view_level, and view_id to user defined values, and passes control to a function block 420. The function block 420 sets the view_level, view_id, and view_direction in the Sequence Parameter Set (SPS), Picture Parameter Set (PPS), View Parameter Set (VPS), slice header, and/or NAL unit header, and passes control to a function block 425. The function block 425 lets the number of views be equal to a variable N, variables i (view number index) and j (picture number index) be equal to zero, and passes control to a decision block 430. The decision block 430 determines whether or not i is less than N. If so, then control is passed to a function block 435. Otherwise, control is passed to a function block 470.

The function block 435 determines whether or not j is less than the number of pictures in view i. If so, then control is passed to a function block 440. Otherwise, control is passed to a function block 490.

The function block 440 starts encoding the current macroblock, and passes control to a function block 445. The function block 445 chooses the macroblock mode, and passes control to a function block 450. The function block 450 encodes the current macroblock, and passes control to a decision block 455. The decision block 455 determines whether or not all macroblocks have been encoded. If so, then control is passed to a function block 460. Otherwise, control is returned to the function block 440.

The function block 460 increments the variable j, and passes control to a function block 465. The function block 465 increments frame_num and Picture Order Count (POC) values, and returns control to the decision block 435.

The decision block 470 determines whether or not to signal the Sequence Parameter Set (SPS), the Picture Parameter Set (PPS), and/or the View Parameter Set (VPS) in-band. If so, the control is passed to a function block 475. Otherwise, control is passed to a function block 480.

The function block 475 writes the Sequence Parameter Set (SPS), the Picture Parameter Set (PPS), and/or the View Parameter Set (VPS) to a file (in-band), and passes control to a function block 485.

The function block 480 writes the Sequence Parameter Set (SPS), the Picture Parameter Set (PPS), and/or the View Parameter Set (VPS) out-of-band, and passes control to the function block 485.

The function block 485 writes the bitstream to a file or streams the bitstream over a network, and passes control to an end block 499.

The function block 490 increments the variable i, resets the frame_num and Picture Order Count (POC) values, and returns control to the decision block 430.

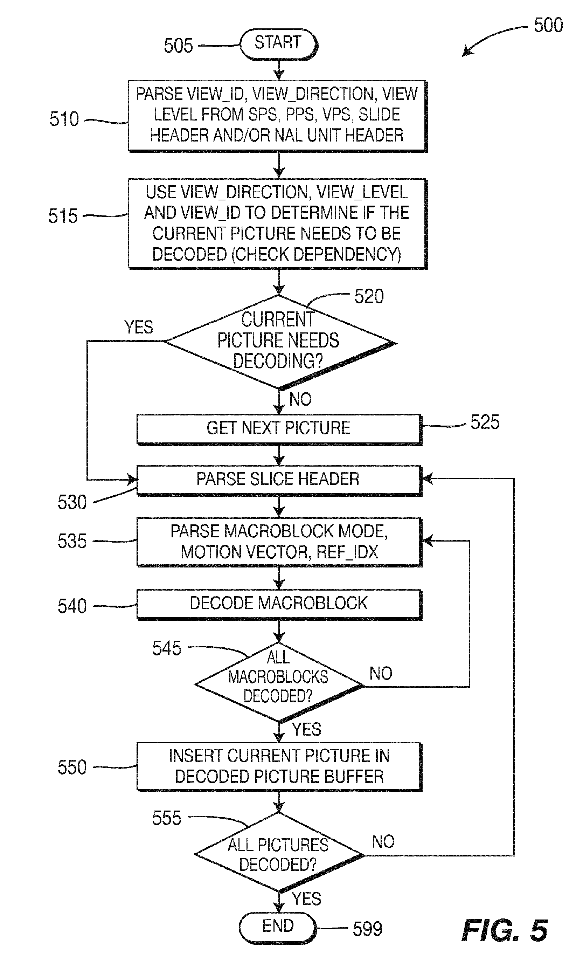

Turning to FIG. 5, an exemplary method for decoding multi-view video content and determining view scalability thereof is indicated generally by the reference numeral 500.

The method 500 includes a start block 505 that passes control to a function block 510. The function block 510 parses the view_id, view_direction, and view_level from the Sequence Parameter Set (SPS), the Picture Parameter Set, the View Parameter Set, the slice header, and/or the NAL unit header, and passes control to a function block 515. The function block 515 uses view_direction, view_level, and view_id to determine if the current picture needs to be decoded (check dependency), and passes control to a decision block 520. The decision block 520 determines whether or not the current picture needs decoding. If so, then control is passed to a function block 530. Otherwise, control is passed to a function block 525.

The function block 525 gets the next picture, and passes control to the function block 530.

The function block 530 parses the slice header, and passes control to a function block 535. The function block 535 parses the macroblock mode, the motion vector, and ref_idx, and passes control to a function block 540. The function block 540 decodes the current macroblock, and passes control to a decision block 545. The decision block 545 determines whether or not all macroblocks have been decoded. If so, the control is passed to a function block 550. Otherwise, control is returned to the function block 535.

The function block 550 inserts the current picture in the decoded picture buffer, and passes control to a decision block 555. The decision block 555 determines whether or not all pictures have been decoded. If so, then control is passed to an end block 599. Otherwise, control is returned to the function block 530.

A description will now be given of some of the many attendant advantages/features of the present invention, some of which have been mentioned above. For example, one advantage/feature is an apparatus that includes an encoder for encoding at least one picture for at least one view corresponding to multi-view video content in a resultant bitstream. The encoder signals at least one of a view direction and a view level to support view scalability for the at least one view using at least one of a message, a field, a flag, and a syntax element.

Another advantage/feature is the apparatus having the encoder as described above, wherein the syntax element is a high level syntax element.

Yet another advantage/feature is the apparatus having the encoder that uses the high level syntax element the as described above, wherein the high level syntax element is included in at least one of a Sequence Parameter Set, a Picture Parameter Set, a Supplemental Enhancement Information message, a slice header, and a Network Abstraction Layer unit header.

Still another advantage/feature is the apparatus having the encoder as described above, wherein at least one of the view direction and the view level is signaled at least one of in-band and out-of-band.

Moreover, another advantage/feature is the apparatus having the encoder as described above, wherein the view direction and the view level are used as dependency information.

Further, another advantage/feature is the apparatus having the encoder wherein the view direction and the view level are used as dependency information as described above, wherein the dependency information is for use for a random access of the at least one view by a decoder.

Also, another advantage/feature is the apparatus having the encoder as described above, wherein a suffix Network Abstraction Layer unit is used to specify an immediately preceding Network Abstraction Layer unit and wherein the view direction and the view level are signaled in the suffix Network Abstraction Layer unit.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope or spirit of the present principles. All such changes and modifications are intended to be included within the scope of the present principles as set forth in the appended claims.

## Claims

1. An apparatus, comprising:
an encoder (100) for encoding at least one picture for at least one view corresponding to multi-view video content in a resultant bitstream, wherein said encoder signals a view direction and a view level to support view scalability for the at least one view using at least one of a message, a field, a flag, and a syntax element, wherein the at least one view is on left direction or right direction from an I-view.

2. The apparatus of claim 1, wherein the view direction and the view level are used as dependency information.

3. The apparatus of claim 2, wherein the dependency information is for use for a random access of the at least one view by a decoder.

4. A method, comprising:
encoding at least one picture for at least one view corresponding to multi-view video content in a resultant bitstream, wherein said encoding step comprises signaling a view direction and a view level to support view scalability for the at least one view using at least one of a message, a field, a flag, and a syntax element (475, 480), wherein the at least one view is on left direction or right direction from an I-view.

5. The method of claim 4, wherein the view direction and the view level are used as dependency information.

6. The method of claim 5, wherein the dependency information is for use for a random access of the at least one view by a decoder.

7. An apparatus, comprising:
a decoder (200) for decoding at least one picture for at least one view corresponding to multi-view video content from a resultant bitstream, wherein said decoder determines a view direction and a view level to support view scalability for the at least one view using at least one of a message, a field, a flag, and a syntax element, wherein the at least one view is on left direction or right direction from an I-view.

8. The apparatus of claim 7, wherein the view direction and the view level are used as dependency information.

9. The apparatus of claim 8, wherein the dependency information is used for a random access of the at least one view.

10. A method, comprising:
decoding at least one picture for at least one view corresponding to multi-view video content from a resultant bitstream, wherein said decoding step comprises determining a view direction and a view level to support view scalability for the at least one view using at least one of a message, a field, a flag, and a syntax element (515), wherein the at least one view is on left direction or right direction from an I-view.

11. The method of claim 10, wherein the view direction and the view level are used as dependency information.

12. The method of claim 11, wherein the dependency information is used for a random access of the at least one view.
